(19) Europäisches Patentamt European Patent Office Office européen des brevets

(11) **EP 2 159 199 A2**

(12) **EUROPÄISCHE PATENTANMELDUNG**

(43) Veröffentlichungstag:
**03.03.2010 Patentblatt 2010/09**

(51) Int Cl.:
***C03B 27/04*** *(2006.01)*

(21) Anmeldenummer: **09167734.4**

(22) Anmeldetag: **12.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **02.09.2008 DE 102008045416**

(71) Anmelder: **Arcon-dur Sicherheitsglas GmbH & Co. KG**
**91555 Feuchtwangen (DE)**

(72) Erfinder:
• **Söder, Bernhard**
  **91639 Wolframs-Eschenbach (DE)**
• **Arntzen, Markus**
  **99438 Legefeld (DE)**
• **Dehner, Hermann**
  **91564 Neuendettelsau (DE)**

(74) Vertreter: **Epping - Hermann - Fischer**
**Patentanwaltsgesellschaft mbH**
**Ridlerstrasse 55**
**80339 München (DE)**

(54) **Vorrichtung und Verfahren zur Herstellung thermisch vorgespannter Glasscheiben und thermisch vorgespannte Glasscheibe**

(57) Es wird eine Vorrichtung (1) und ein Verfahren zur Herstellung thermisch vorgespannter Glasscheiben (7) angegeben. Mittels einer Messvorrichtung (4) wird die optische Anisotropie einer Glasscheibe (7) an einer Vielzahl von Messpunkten, die über die Fläche der Glasscheibe (7) verteilt sind, gemessen, um eine Heizvorrichtung (2) beim Aufheizen und/oder eine Abkühlvorrichtung (3) beim Abkühlen der Glasscheiben (7) anhand dieser Messdaten zu steuern. Weiterhin wird eine thermisch vorgespannte Glasscheibe (7) angegeben, bei der unerwünschte Farbeffekte vermindert sind.

Fig. 1

EP 2 159 199 A2

**Beschreibung**

Die Erfindung betrifft eine Vorrichtung und ein Verfahren zur Herstellung thermisch vorgespannter Glasscheiben. Weiterhin betrifft die Erfindung eine thermisch vorgespannte Glasscheibe, insbesondere eine Flachglasscheibe für die Anwendung als Architekturglas.

Diese Patentanmeldung beansprucht die Priorität der deutschen Patentanmeldung 10 2008 045 416.8, deren Offenbarungsgehalt hiermit durch Rückbezug aufgenommen wird.

Beim thermischen Vorspannen erzeugt man durch eine Wärmebehandlung im Inneren der Glasscheibe eine permanente Zugspannung und an den Oberflächen und an den Rändern eine permanente Druckspannung.

Die wesentlichen Eigenschaften von thermisch vorgespannten Glasscheiben liegen in den durch den thermischen Vorspannprozess eingeprägten Oberflächendruckspannungen im Glas, welche zu einer wesentlich erhöhten Biegezugfestigkeit der so hergestellten Glasscheiben gegenüber unbehandelten Glasscheiben führt. Thermisch vorgespanntes Glas hat daher eine höhere mechanische Zerstörschwelle als normales Floatglas. Die Festigkeit des Glases erhöht sich dabei in etwa um das Niveau der im Glas eingeprägten permanenten Oberflächendruckspannung.

Eine voll thermisch vorgespannte Glasscheibe, so genanntes Einscheibensicherheitsglas (ESG), soll im Allgemeinen einen Vorspanngrad an der Oberfläche von wenigstens 69 MPa aufweisen. Von teilvorgespanntem Glas (TVG) spricht man im Allgemeinen, wenn Oberflächendruckspannungen von 24-52 MPa erreicht werden.

Des Weiteren weisen thermisch vorgespannte Glasscheiben eine bessere Beständigkeit gegen Temperaturdifferenzen in der Scheibenfläche auf, verbunden mit einer höheren Temperaturwechselbeständigkeit.

Aufgrund der hinreichend hohen Vorspannung weist das Einscheibensicherheitsglas gegenüber teilvorgespanntem Glas zusätzlich die erwünschte Eigenschaft auf, dass es bei mechanischer Beschädigung über die Belastungsgrenzen hinaus in eine Vielzahl von kleinen Bruchstücken zerfällt, die eine wesentlich geringere Verletzungsgefahr darstellen als zerbrochene Floatglasscheiben oder teilvorgespannte Gläser. Verantwortlich für das feinkrümelige Scherbenbild im Falle eines Bruches ist die in der Mittelebene des Einscheibensicherheitsglases eingefrorene Zugspannung.

Das thermische Vorspannen von Glasscheiben erfolgt im Allgemeinen dadurch, dass zunächst die gesamte Glasscheibe an den Erweichungspunkt des Glases (ca. 100 K über den Transformationspunkt des Glases) erhitzt wird. Im Anschluss daran wird das Glas von der Oberfläche her einer raschen Abkühlung unterworfen.

Die in dieser Weise gemäß dem Stand der Technik behandelten Glasscheiben zeigen bei Beleuchtung mit wenigstens teilpolarisiertem Licht oftmals mehr oder weniger starke unerwünschte Farbeffekte. Diese Farbeffekte sind häufig auch unter natürlichen Beleuchtungsbedingen, wie sie beispielsweise bei bedecktem Himmel auftreten, für jedermann sichtbar, zum Beispiel an einer Glasfassade.

Der Grund für das Auftreten dieser Farbeffekte sind Doppelbrechungserscheinungen, welche aufgrund des durch das thermische Vorspannen im Glas eingeprägten zweidimensionalen Spannungszustandes auftreten. Die spannungsbedingte Doppelbrechung hat zur Folge, dass ein das Glas durchlaufender Lichtstrahl eine Veränderung seines Polarisationszustandes erfährt.

Die Patentschrift DE 197 20 330 C1 offenbart ein Verfahren und eine Vorrichtung zur Messung von Spannungen in Glasscheiben mit einem Streulichtverfahren, bei dem eine seine Polarisation periodisch zwischen linear und zirkular änderndes monochromatisches Strahlenbündel schräg auf die Glasplatte gerichtet und das innerhalb der Glasscheibe auf dem Weg des Lichtstrahlenbündels entstehende Streulicht mit einer Videokamera erfasst wird.

Weiterhin ist aus der Druckschrift DE 195 11 707 A1 ein Verfahren zur Bestimmung von Spannungen in transparenten Materialien bekannt, wobei polarisiertes Licht durch das Material geschickt wird und der austretende Lichtstrahl derart analysiert wird, dass eine durch die Doppelbrechung aufgrund von Spannungen im Material eingetretene Änderung des Polarisationszustandes des Lichtstrahls gemessen wird, die in direktem Zusammenhang mit dem optischen Gangunterschied und der Spannung im Glas steht.

Eine Kombination von zwei oder mehr Glasscheiben in einem Fensterelement oder mehreren hintereinander angeordneten Elementen verstärkt die Sichtbarkeit der Farbeffekte. Generell verstärken sich die Farbeffekte mit zunehmender Dicke der Gläser, insbesondere unter schrägem Lichteinfall. Auch bei zueinander in einem Winkel angeordneten Scheiben können daraus resultierende mehrfache Reflexionen, die eine Teilpolarisation des Lichts bewirken, diesen Effekt verstärken, z.B. in Duschkabinen.

Weiterhin verstärken sich unerwünschte Farbeffekte, wenn auf thermisch vorgespanntes Glas eine Beschichtung, zum Beispiel eine Sonnenschutz- oder Wärmeschutzbeschichtung aufgebracht wird. Eine solche Beschichtung ist zum Beispiel aus der Druckschrift EP 1529761 A1 bekannt. Durch die Filterwirkung solcher Beschichtungen, die eine spektrale Abhängigkeit des Reflexionsgrades von der Wellenlänge und der Polarisationsrichtung des einfallenden Lichtes aufweisen, kann es zu einer wellenlängenabhängigen verstärkten bzw. abgeschwächten Wahrnehmung des reflektierten Lichtes kommen. Dies führt zu höheren Farbkontrasten zwischen Bereichen unterschiedlicher Glasspannungen, wodurch die vorhandenen Polarisationsfelder in ihrer Sichtbarkeit noch weiter hervorgehoben werden.

Der Erfindung liegt die Aufgabe zugrunde, eine Vorrichtung und ein Verfahren zur Herstellung thermisch vorgespannter Glasscheiben anzugeben, die zur Herstellung von Glasscheiben mit einer verminderten optischen Anisotropie geeignet sind. Weitergehend soll eine thermisch vorgespannte Glasscheibe angegeben werden, bei der durch optische Anisotropie bedingte unerwünschte Farbeffekte vermindert sind. Insbesondere sollen auch bei großflächigen und/oder beschichteten Glasscheiben keine sichtbaren Farbeffekte auftreten.

Diese Aufgabe wird durch eine Vorrichtung zur Herstellung thermisch vorgespannter Glasscheiben, ein Verfahren zur Herstellung thermisch vorgespannter Glasscheiben und eine thermisch vorgespannte Glasscheibe gemäß den unabhängigen Patentansprüchen gelöst. Vorteilhafte Ausgestaltungen und Weiterbildungen der Erfindung sind Gegenstand der abhängigen Ansprüche.

Eine Vorrichtung zur Herstellung thermisch vorgespannter Glasscheiben umfasst gemäß zumindest einer Ausgestaltung eine Heizvorrichtung, eine Abkühlvorrichtung und eine Messvorrichtung, die geeignet ist, die optische Anisotropie einer Glasscheibe an einer Vielzahl von Messpunkten, die über die Fläche der Glasscheibe verteilt sind, zu messen. Vorzugsweise ist die Vielzahl von Messpunkten in einem zweidimensionalen Raster über die Fläche der Glasscheibe verteilt.

Weiterhin umfasst die Vorrichtung vorteilhaft eine Steuereinheit, die geeignet ist, die Heizvorrichtung und/oder die Abkühlvorrichtung anhand der von der Messvorrichtung ermittelten Messdaten zu steuern.

Die Erfindung macht sich die Erkenntnis zu nutze, dass eine Messung und Regelung der Oberflächentemperatur der Glasscheibe in der Heizvorrichtung und/oder der Abkühlvorrichtung, in der die Glasscheiben thermisch vorgespannt werden, allein nicht ausreicht, um eine Homogenität der Temperaturverteilung im Volumen der Glasscheibe über die gesamte Fläche der Glasscheibe zu gewährleisten. Vielmehr hat es sich als vorteilhaft herausgestellt, die optische Anisotropie der Glasscheibe an einer Vielzahl von Messpunkten, die beispielsweise in einem zweidimensionalen Raster über die Fläche der Glasscheibe verteilt sind, zu messen, und die auf diese Weise gewonnenen Messdaten dazu zu nutzen, das Aufheizen und das Abkühlen der Glasscheibe in der Aufheizvorrichtung und der Abkühlvorrichtung zu steuern.

Die Messung der optischen Anisotropie an der Vielzahl von über die Fläche der Glasscheibe verteilten Messpunkten erfolgt vorzugsweise dadurch, dass der Polarisationszustand von Licht einer polarisierten Lichtquelle nach dem Durchgang des polarisierten Lichts durch die Glasscheibe gemessen wird. Insbesondere kann die Messung der optischen Anisotropie auf der so genannten Sénarmont-Methode basieren. Bei diesem Messverfahren wird vorzugsweise ein linear polarisierter Lichtstrahl orthogonal auf die Glasscheibe gerichtet und so orientiert, dass die Polarisationsrichtung parallel zur Winkelhalbierenden der senkrecht aufeinander stehenden Hauptspannungsrichtungen in der Glasscheibe verläuft. Dieser linear polarisierte Lichtstrahl erfährt beim Durchgang durch die Glasscheibe, die mit Brechzahlfluktuationen aufgrund von mechanischen Spannungen behaftet ist, eine Modifikation des Polarisationszustandes. Die Änderung des Polarisationszustandes wird mittels einer im Strahlengang drehbar gelagerten λ/4-Platte und eines Analysators, bei dem es sich um einen drehbaren Polarisationsfilter handelt, in Kombination mit einem Detektor analysiert und daraus der optische Gangunterschied für die beiden Polarisationsrichtungen, die parallel zu den beiden Hauptspannungsrichtungen verlaufen, bestimmt.

Zur Durchführung der Messung enthält die Messvorrichtung vorzugsweise eine Lichtquelle, einen Polarisator, eine λ/4-Platte, einen Analysator und einen Detektor. Der Polarisator, die λ/4-Platte und der Analysator sind vorzugsweise rotierbar, insbesondere synchron rotierbar, um in einem ersten Messschritt die Lage der Hauptspannungsrichtungen der Glasscheibe zu bestimmen und in einem zweiten Messschritt den Gangunterschied für die beiden Polarisationsrichtungen, die parallel zu den beiden Hauptspannungsrichtungen verlaufen, zu bestimmen.

Als Lichtquelle für die Messvorrichtung ist insbesondere ein Laser geeignet. Aufgrund des vergleichsweise geringen Strahlquerschnitts lässt sich mit einer Laserlichtquelle eine hohe Ortsauflösung erzielen. Beispielsweise kann für die Messung ein HeNe-Laser verwendet werden, der eine Wellenlänge von 632,8 nm aufweist. Durch die Wellenlänge der Lichtquelle wird der mögliche Messbereich bestimmt. Da mittels des Analysators Phasenunterschiede bis zu 180° und somit Gangunterschiede bis zu einer halben Wellenlänge der Lichtquelle messbar sind, beträgt der Messbereich die Hälfte der Wellenlänge der Lichtquelle. Durch die Verwendung einer Lichtquelle mit größerer Wellenlänge kann der Messbereich des optischen Gangunterschieds vergrößert werden, wodurch sich aber die Auflösung verringert, während mit einer kurzwelligeren Lichtquelle ein geringerer Messbereich, aber eine höhere Auflösung zur Verfügung steht.

Die Heizvorrichtung enthält vorzugsweise Mittel zur Strahlungserwärmung und/oder Konvektionserwärmung der Glasscheiben, welche durch eine Steuereinheit in Abhängigkeit von den von der Messvorrichtung ermittelten Messdaten steuerbar sind. Beispielsweise kann die Heizvorrichtung Heizwendeln zur Strahlungserwärmung umfassen, die vorzugsweise in mehreren Segmenten in der Heizvorrichtung angeordnet sind, so dass durch die Einstellung der Leistung an den einzelnen Heizwendeln eine räumliche Temperaturverteilung in der Heizvorrichtung eingestellt werden kann.

Weiterhin umfasst die Heizvorrichtung vorzugsweise eine Vielzahl von Düsen, mittels denen ein Luft- oder Gasstrom auf die Glasscheiben gerichtet werden kann, um die Scheiben auf diese Weise durch Konvektion zu erwärmen. Durch eine gezielte Einstellung des Gas- oder Luftstroms durch die einzelnen Düsen kann gezielt die räumliche Temperaturverteilung in der Glasscheibe beeinflusst werden.

In der Abkühlvorrichtung werden die Glasscheiben vorzugsweise mittels Konvektionskühlung abgekühlt, wozu die Abkühlvorrichtung beispielsweise mehrere Düsen enthält, durch die ein Luft- oder Gasstrom auf die Glasscheiben gerichtet werden kann. Durch eine gezielte Steuerung der Düsen kann die räumliche Temperaturverteilung in der Abkühlvorrichtung gezielt eingestellt werden, um eine gewünschte Temperaturverteilung in der Glasscheibe zu erzielen.

Bei einer Ausgestaltung der Vorrichtung zur Herstellung thermisch vorgespannter Glasscheiben enthält die Vorrichtung eine Transportvorrichtung zum Transport der Glasscheiben, wobei die Transportvorrichtung vorzugsweise mittels der Steuereinheit in Abhängigkeit von den von der Messvorrichtung ermittelten Messdaten steuerbar ist. Mittels der Transportvorrichtung werden die Glasscheiben durch die Heizvorrichtung und die nachfolgende Abkühlvorrichtung bewegt. Vorzugsweise werden die Glasscheiben in einer reversierenden Linearbewegung durch die Heizvorrichtung und die Abkühlvorrichtung bewegt, das heißt die Glasscheiben werden beim Aufheizvorgang und/oder beim Abkühlvorgang hin- und herbewegt, um eine möglichst gleichmäßige Aufheizung oder Abkühlung zu erzielen. Falls in der Messvorrichtung optische Anisotropien in der Glasscheibe festgestellt werden, können die Parameter der Bewegung derart optimiert werden, dass die optischen Anisotropien vermindert werden.

Bei einer bevorzugten Ausführung erlaubt die Transportvorrichtung nicht nur eine eindimensionale Linearbewegung der Glasscheiben, sondern eine mindestens zweidimensionale Bewegung, das heißt die Glasscheiben sind vorzugsweise nicht nur in einer Haupttransportrichtung, sondern auch in einer Richtung senkrecht dazu mittels der Transportvorrichtung bewegbar. Durch eine derartige zweidimensionale Bewegung der Scheiben mittels der Transportvorrichtung ist es möglich, durch lokale Temperaturunterschiede bedingte optische Anisotropien noch effizienter zu vermindern.

Weiterhin kann auch eine zweidimensionale Relativbewegung zwischen den Glasscheiben und den Düsen der Heizvorrichtung und/oder Abkühlvorrichtung dadurch realisiert sein, dass die Glasscheiben in der Haupttransportrichtung bewegt werden und die Düsen der Heizvorrichtung und/oder Abkühlvorrichtung reversierend senkrecht zur Haupttransportrichtung bewegt werden.

Die Messvorrichtung, anhand deren Messdaten die Steuereinheit die Heizvorrichtung, die Abkühlvorrichtung und/oder die Transportvorrichtung steuert, ist bei einer Ausführungsform der Heizvorrichtung und der Abkühlvorrichtung nachgeordnet, das heißt die Glasscheiben gelangen mittels der Transportvorrichtung in die Messvorrichtung, nachdem sie die Heizvorrichtung und die Abkühlvorrichtung durchlaufen haben. Bei dieser Ausführungsform können die mittels der Messvorrichtung ermittelten Messdaten einer Glasscheibe nicht mehr zur Beeinflussung des Aufheizens oder des Abkühlens dieser Glasscheibe herangezogen werden, weil die Glasscheibe vor der Messung bereits die Heizvorrichtung und die Abkühlvorrichtung durchlaufen hat. Vielmehr werden die mittels der Messvorrichtung ermittelten Messdaten von der Steuereinheit für die Optimierung des Aufheizens und des Abkühlens der nachfolgenden Glasscheiben verwendet.

Die Herstellung einer Charge von Glasscheiben erfolgt vorzugsweise derart, dass zunächst eine Testscheibe die Heizvorrichtung, die Abkühlvorrichtung und die nachfolgende Messvorrichtung durchläuft, wobei dann anhand der von der Messvorrichtung ermittelten Messdaten die Parameter der Aufheizvorrichtung, der Abkühlvorrichtung und/oder der Transportvorrichtung für die nachfolgenden Glasscheiben optimiert werden. Dieser Vorgang kann gegebenenfalls anhand von mehreren Testscheiben wiederholt werden, bis alle Parameter derart optimiert sind, dass die optische Anisotropie in gewünschter Weise vermindert ist.

Es hat sich herausgestellt, dass unerwünschte Farbeffekte aufgrund von spannungsbedingter optischer Anisotropie in der Regel nicht mehr wahrnehmbar sind, wenn der Gangunterschied für die beiden verschiedenen Polarisationsrichtungen, die parallel zu den Hauptspannungsrichtungen der Glasscheibe verlaufen, nicht mehr als 80 nm beträgt. Die Optimierung der Parameter der Heizvorrichtung und der Abkühlvorrichtung anhand der von der Messvorrichtung ermittelten Messdaten wird daher vorzugsweise so lange fortgesetzt, bis der optische Gangunterschied bei einer mittels der Vorrichtung und des Verfahren hergestellten Glasscheibe im Bereich einer vorgegebenen Messfläche an keiner Stelle größer als 80 nm ist. Größere Gangunterschiede sollten allenfalls an den äußersten Rändern der Glasscheibe auftreten, die in der Anwendung nicht sichtbar sind. Die Messfläche umfasst daher vorzugsweise mindestens 95%, besonders bevorzugt 98% oder sogar 99% der Fläche der Glasscheibe.

Bei einer bevorzugten Ausführungsform weist die Vorrichtung zusätzlich eine Beschichtungsvorrichtung zum Aufbringen einer oder mehrerer Schichten auf die Glasscheiben auf. In diesem Fall können die Glasscheiben nach dem Durchlaufen der Aufheiz- und der Abkühlvorrichtung im vorgespannten Zustand insbesondere mit einer optisch wirksamen Beschichtung, zum Beispiel einer Wärmeschutz- oder Sonnenschutzbeschichtung, versehen werden.

Derartige Sonnenschutz- und Wärmeschutzbeschichtungen werden insbesondere bei Architekturglas eingesetzt, um eine bessere Wärmeisolierung zu erzielen oder die Aufheizung von Gebäuden bei Sonneneinstrahlung zu vermindern. Dazu geeignete Schichtsysteme sind an sich bekannt und umfassen typischerweise eine oder mehrere Metallschichten, die so dünn sind, dass sie im sichtbaren Spektralbereich noch transparent sind. Die mindestens eine dünne Metallschicht ist in der Regel zwischen mehreren dielektrischen Schichten, insbesondere Oxid- oder Nitridschichten eingebettet, welche die mindestens eine Metallschicht insbesondere vor Umwelteinflüssen schützen. Das Abscheiden derartiger optisch wirksamer Schichten auf die thermisch vorgespannten Glasscheiben kann beispielsweise mittels Vakuumbeschichtungsverfahren, insbesondere durch Magnetronsputtern, erfolgen.

Bei einer bevorzugten Ausführung der Vorrichtung zur Herstellung thermisch vorgespannter Glasscheiben können die Schichtparameter der mittels der Beschichtungsvorrichtung aufgebrachten Schichten durch die Steuereinheit in Abhängigkeit von den in der Messvorrichtung ermittelten Messdaten eingestellt werden. Insbesondere können die Schichtdicken einer oder mehrerer Schichten der Beschichtung, falls in der Messvorrichtung eine optische Anisotropie der Glasscheibe festgestellt wird, derart optimiert werden, dass die Glasscheibe nach dem Aufbringen der optisch wirksamen Schichten nur noch eine möglichst geringe optische Anisotropie aufweist, die nicht zu lokal variierenden Farbeindrücken führt. Es ist möglich, bei der Beschichtung der Glasscheiben die Farbwerte der Schicht an die aus der Messung bekannte Restanisotropie anzupassen und so eine weitere Minimierung der Sichtbarkeit der Anisotropien herbeizuführen, um so das Auftreten von störenden Farbeffekten zu unterbinden.

Die Beschichtungsvorrichtung ist vorzugsweise so eingerichtet, dass die Schichtdicken der aufgebrachten Schichten lokal über die Fläche der Glasscheibe zumindest geringfügig variiert werden kann, um auf diese Weise mittels der Beschichtung lokal auftretende optische Anisotropien kompensieren zu können. Beispielsweise weisen Magnetron-Sputteranlagen für die Beschichtung von großflächigen Glasscheiben, insbesondere für Architekturglas, mehrere Kathoden aus dem abzuscheidenden Material auf, wobei die Abscheiderate insbesondere von der Leistung und dem Magnetfeld, mit dem die Kathoden betrieben werden, abhängt.

Eine lokale Veränderung zumindest eines der Beschichtungsparameter ermöglicht es, die Schichtdicke der Schichten zumindest geringfügig über die Fläche der Scheiben zu variieren und somit eine optische Anisotropie, die an der unbeschichteten Scheibe festgestellt wurde, zu vermindern.

Gemäß zumindest einer Ausführungsform einer thermisch vorgespannten Glasscheibe gemäß der Erfindung beträgt der optische Gangunterschied für Licht zweier Polarisationsrichtungen, die parallel zu den Hauptspannungsrichtungen der Glasscheibe verlaufen, an keiner Stelle einer Messfläche, die mindestens 95 % der Gesamtfläche der Glasscheibe umfasst, mehr als 80 nm.

Es hat sich herausgestellt, dass bei einem derart geringen Gangunterschied zwischen zwei Lichtstrahlen, die entlang der einen und der anderen Hauptspannungsrichtung der Glasscheibe polarisiert sind, nach dem Durchgang durch die Glasscheibe keine störenden Farbunterschiede für einen Betrachter wahrnehmbar sind. Bevorzugt beträgt die Messfläche, innerhalb derer der Gangunterschied weniger als 80 nm beträgt, mindestens 98 % oder sogar mindestens 99 % der Gesamtfläche der Glasscheibe.

Idealerweise würde sogar an keiner Stelle der Glasscheibe ein Gangunterschied von mehr als 80 nm auftreten, wobei sich dieser Idealzustand allerdings aufgrund von Randeffekten an den äußersten Rändern der Glasscheiben nicht realisieren lässt. Diese äußersten Randbereiche der Glasscheibe sind aber typischerweise in der Anwendung hinter Blenden verborgen, so dass an diesen Stellen keine störenden Farbabweichungen wahrnehmbar sind.

Die Glasscheibe weist vorteilhaft eine Fläche von mindestens 0,25 m², bevorzugt von 1 m² und besonders bevorzugt von mindestens 5 m² auf. Insbesondere kann es sich bei der Glasscheibe um eine Flachglasscheibe, die beispielsweise zur Anwendung als Architekturglas vorgesehen ist, handeln.

Bei der Glasscheibe kann es sich insbesondere um so genanntes teilvorgespanntes Glas, das an seiner Oberfläche eine Druckspannung von mindestens 24 MPa aufweist, handeln. Besonders bevorzugt ist die Glasscheibe ein EinscheibenSicherheitsglas (ESG), das an seiner Oberfläche eine Druckspannung von mindestens 69 MPa aufweist.

Die Dicke der Glasscheibe beträgt gemäß einer vorteilhaften Ausführungsform mindestens 8 mm, bevorzugt mindestens 12 mm und besonders bevorzugt mindestens 15 mm. Insbesondere kann die Glasscheibe eine Dicke zwischen 8 mm und 19 mm aufweisen.

Bei einer weiteren bevorzugten Ausführungsform ist die Glasscheibe mit einer Beschichtung, die zum Beispiel eine oder mehreren optisch wirksame Schichten enthält, versehen. Insbesondere kann es sich bei der Beschichtung um eine Sonnenschutz- oder Wärmeschutzbeschichtung handeln. Wie bereits zuvor erläutert enthalten derartige Beschichtungen typischerweise eine oder mehrere dünne Metallschichten, beispielsweise aus Silber, die zwischen dielektrischen Schichten, insbesondere Oxid- oder Nitridschichten, eingebettet sind. Bei derartigen mit einer Beschichtung versehenen Glasscheibe machen sich optische Anisotropien, wenn sie nicht durch eine gezielte Steuerung des Vorspannprozesses vermindert werden, besonders störend bemerkbar, da derartige optische Beschichtungen in der Regel eine spektrale Abhängigkeit des Reflektionsgrades von der Wellenlänge und der Polarisationsrichtung des einfallenden Lichts aufweisen, wodurch Farbunterschiede, die in vorgespanntem Glas aufgrund von optischen Anisotropien auftreten, in ihrer Sichtbarkeit noch weiter hervorgehoben werden können. Unerwünschte Farbeffekte sind daher bei optisch vorgespannten Gläsern, die mit einer Beschichtung versehen werden, in der Regel noch gravierender als im Falle nicht beschichteter Glasscheiben.

Die Erfindung wird im Folgenden anhand von Ausführungsbeispielen im Zusammenhang mit den Figuren 1 bis 6 näher erläutert.

Es zeigen:

Figur 1     eine schematische Darstellung eines Ausführungsbeispiels einer Vorrichtung zur Herstellung von thermisch vorgespannten Glasscheiben gemäß der Erfindung,

Figur 2     eine schematisch dargestellte Detailansicht eines Ausführungsbeispiels der in der Vorrichtung enthaltenen Messvorrichtung,

Figur 3     eine schematische perspektivische Darstellung einer thermisch vorgespannten Glasscheibe gemäß einem Ausführungsbeispiel der Erfindung,

Figur 4     eine schematische Darstellung eines Querschnitts durch eine beschichtete thermisch vorgespannte Glasscheibe gemäß einem Ausführungsbeispiel der Erfindung,

Figur 5     eine grafische Darstellung des gemessenen Gangunterschieds in Abhängigkeit von über die Glasfläche verlaufenden Koordinaten x und y bei einer thermisch vorgespannten Glasscheibe gemäß einem Ausführungsbeispiel der Erfindung, und

Figur 6     einen grafische Darstellung des gemessenen Gangunterschieds in Abhängigkeit von über die Glasfläche verlaufenden Koordinaten x und y bei einer thermisch vorgespannte Glasscheibe gemäß dem Stand der Technik.

Gleiche oder gleichwirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

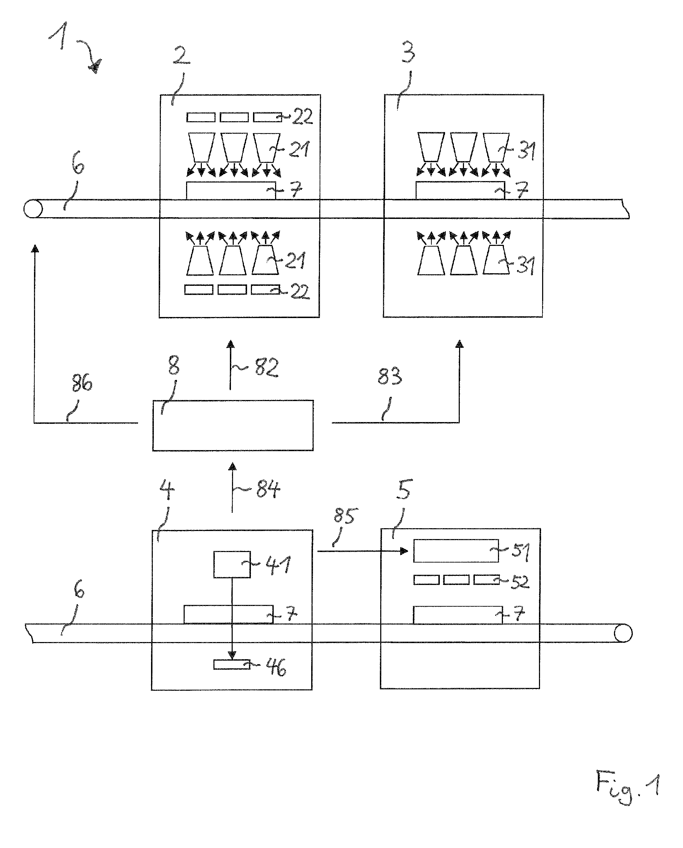

Die in Figur 1 dargestellte Vorrichtung zur Herstellung thermisch vorgespannter Glasscheiben gemäß einem Ausführungsbeispiel der Erfindung enthält eine Heizvorrichtung 2 zum Erhitzen der Glasscheiben 7, eine Abkühlvorrichtung 3 zum Abkühlen der Glasscheiben 7 nach dem Aufheizvorgang und eine Messvorrichtung 4 zur Messung der optischen Anisotropie der Glasscheiben 7.

Optional enthält die Vorrichtung 1 zusätzlich eine Beschichtungsvorrichtung 5, in der die Glasscheiben 7 nach dem thermischen Vorspannen mit einer optisch wirksamen Beschichtung versehen werden können.

Innerhalb der Vorrichtung 1 können die Glasscheiben 7 vorteilhaft mittels einer Transportvorrichtung 6 bewegt werden.

Bei dem Verfahren zur Herstellung thermisch vorgespannter Glasscheiben werden die Glasscheiben 7 zuerst mittels der Transportvorrichtung 6 in die Heizvorrichtung 2 bewegt. Das Aufheizen der Glasscheiben 7 in der Heizvorrichtung 2 erfolgt vorteilhaft sowohl durch Strahlungserwärmung als auch Konvektionserwärmung. Zur Strahlungserwärmung können in der Heizvorrichtung 2 beispielsweise Heizwendeln 22 verteilt sein. Weiterhin kann die Heizvorrichtung 2 zur Konvektionserwärmung der Glasscheiben 7 Düsen 21 umfassen, durch die ein Luft- oder Gasstrom auf die Glasscheiben 7 gerichtet werden kann. Die Heizwendeln 22 und die Düsen 21 sind vorzugsweise sowohl oberhalb als auch unter Die Mittel zur Strahlungserwärmung 22 und die Mittel zur Konvektionserwärmung 21 sind vorteilhaft räumlich über der Fläche der Glasscheibe 7 verteilt und vorzugsweise einzeln durch eine Steuereinheit 8 ansteuerbar, so dass eine gewünschte Temperaturverteilung über die Fläche der Glasscheibe 7 bei dem Aufheizvorgang erzielt werden kann.

Nach dem Durchlaufen der Heizvorrichtung 2 werden die Glasscheiben 7 bei dem Verfahren mittels der Transportvorrichtung 6 in die Abkühlvorrichtung 3 bewegt. Die Abkühlvorrichtung 3 enthält beispielsweise Düsen 31, mittels denen ein Luft- oder Gasstrom zur Abkühlung der Glasscheiben auf die Glasscheiben 7 gerichtet werden kann. Die Düsen 31 sind vorteilhaft räumlich über die Fläche der Glasscheibe 7 verteilt und vorzugsweise mittels der Steuereinheit 8 einzeln ansteuerbar, so dass eine gewünschte räumliche Temperaturverteilung über der Glasscheibe bei dem Abkühlvorgang erzielt werden kann.

Um die Glasscheiben 7 in der Heizvorrichtung 2 möglichst homogen aufzuheizen und in der Abkühlvorrichtung 3 möglichst homogen abzukühlen, ist es vorteilhaft, wenn die Glasscheiben 7 beim Aufheiz- oder Abkühlvorgang mittels der Transporteinrichtung 6 reversierend hin- und herbewegt werden.

Besonders vorteilhaft ist es, wenn die Scheiben 7 mittels der Transportvorrichtung 6 nicht nur in der Haupttransportrichtung, in der die Glasscheiben 7 von der Heizvorrichtung 2 zur Abkühlvorrichtung 3 und zur nachfolgenden Messvorrichtung 4 bewegt werden, bewegbar sind, sondern die Transportvorrichtung 6 auch eine Bewegung der Glasscheiben senkrecht zu dieser Haupttransportrichtung ermöglicht. Die Homogenität der Temperaturverteilung über die Fläche der Glasscheiben 7 wird durch eine derartige zweidimensionale Bewegung der Glasscheiben 7 in der Heizvorrichtung 2 und/oder der Abkühlvorrichtung 3 weiter verbessert.

Alternativ kann eine zweidimensionale Relativbewegung zwischen den Glasscheiben 7 und den Düsen 21, 31 der Heizvorrichtung 2 und/oder Abkühlvorrichtung 3 dadurch realisiert sein, dass die Glasscheiben 7 in der Haupttransportrichtung bewegt werden und die Düsen 21, 31 der Heizvorrichtung 2 und/oder Abkühlvorrichtung 3 reversierend senkrecht zur Haupttransportrichtung bewegt werden.

Die Parameter, die den Aufheizvorgang und den Abkühlvorgang und somit die sich im Glas ergebenden Spannungszustände nach dem Aufheizen und Abkühlen maßgeblich beeinflussen, sind insbesondere die zeitliche und räumliche Temperaturverteilung in der Heizvorrichtung 2 und der Abkühlvorrichtung 3, die Aufheizgeschwindigkeit, die Aufheizdauer, das Verhältnis von Konvektions- zu Strahlungsheizung, die Drücke der Gas- oder Luftströme in den Düsen 21 der Heizvorrichtung und den Düsen 31 der Abkühlvorrichtung 3, die Leistung der Heizelemente 22, die Zusammensetzung der Luft- oder Gasatmosphäre in der Heizvorrichtung 2 und der Abkühlvorrichtung 3, sowie die Art der Bewegung der Glasscheiben 7 in der Aufheizvorrichtung 2 und der Abkühlvorrichtung 3 mittels der Transportvorrichtung 6. Weiterhin beeinflussen insbesondere die Geometrien der Düsen 21, 31 der Heizvorrichtung 2 und der Abkühlvorrichtung 3, die Abstände zwischen den Düsen 21, 31 und der Abstand zwischen der Glasscheiben 7 und den Düsen 21, 31 den Aufheiz- und Abkühlvorgang. Weiterhin können sich auch äußere Einflüsse, insbesondere die Luftfeuchte, auf den Aufheiz- und Abkühlvorgang auswirken und somit die sich im Glas ergebenden Spannungszustände beeinflussen.

Nach dem Durchlaufen der Abkühlvorrichtung 3 werden die Glasscheiben 7 vorteilhaft mittels der Transportvorrichtung 6 in die Messvorrichtung 4 bewegt. In der Messvorrichtung 4 wird die optische Anisotropie der Glasscheibe 7 an einer Vielzahl von Messpunkten, die vorzugsweise in einem zweidimensionalen Raster über die Fläche der Glasscheibe 7 verteilt sind, gemessen. Als Maß für die optische Anisotropie kann insbesondere der optische Gangunterschied, der sich nach dem Durchlaufen der Glasscheibe für entlang der beiden Hauptspannungsrichtungen polarisierte Lichtstrahlen ergibt, verwendet werden.

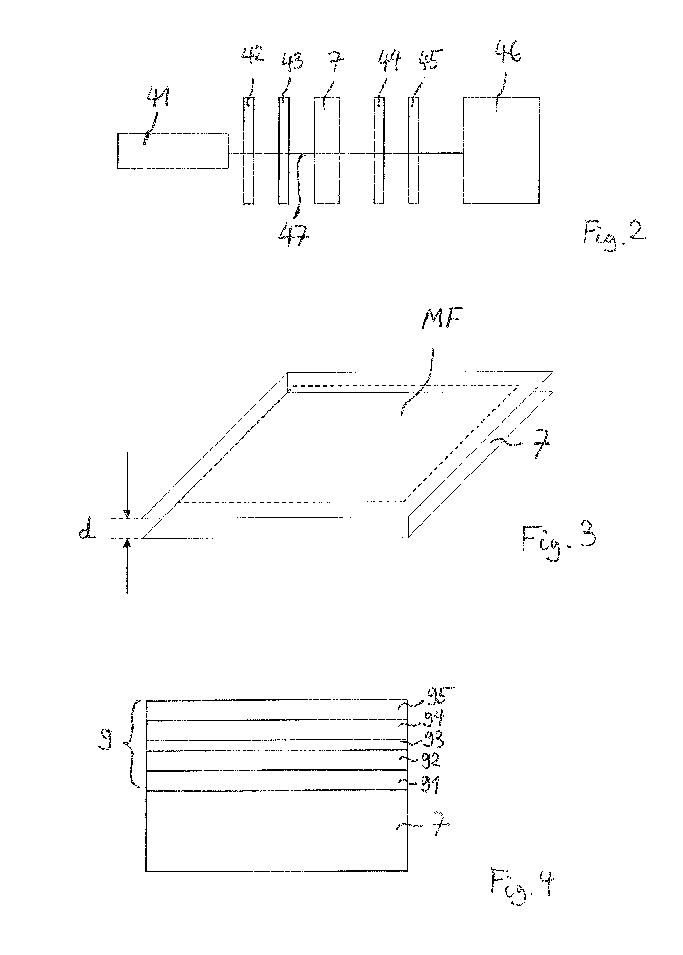

Der Aufbau der Messvorrichtung 4 ist in Figur 2 vergrößert dargestellt. Das Messprinzip beruht auf der Analyse des Polarisationszustandes eines polarisierten Lichtstrahls 47 nach dem Durchlaufen der Glasscheibe 7. Die Messvorrichtung 4 enthält eine Lichtquelle 41, die einen möglichst geringen Strahldurchmesser aufweist. Der Strahldurchmesser der Lichtquelle 41 bestimmt die Ortsauflösung, die bei der Messung erzielt werden kann. Vorzugsweise wird ein Laser als Lichtquelle 41 verwendet, beispielsweise ein HeNe-Laser mit einer Wellenlänge von $\lambda$ = 632,8 nm. Der Laser 41 kann beispielsweise einen Strahldurchmesser von 0,75 mm aufweisen. Dem Laser 41 kann eine $\lambda$/4-Platte 42 nachgeordnet sein, die aus der linear polarisierten Laserstrahlung zirkular polarisiertes Licht erzeugt. Aus dem auf diese Weise erzeugten zirkular polarisierten Licht wird nachfolgend mittels eines rotierbaren Polarisators 43 linear polarisiertes Licht mit einer definierten Polarisationsrichtung erzeugt. Der so erzeugte linear polarisierte Lichtstrahl 47 tritt nachfolgend durch die Glasscheibe 7 hindurch und trifft dann auf eine weitere $\lambda$/4-Platte 44, einen rotierbaren Analysator 45 und nachfolgend auf einen Detektor 46, bei dem es sich zum Beispiel um einen lichtempfindlichen Si-Detektor handeln kann.

Bei dem Messvorgang ist die Glasscheibe 7 zwischen dem rotierbaren Polarisator 43 auf der einen Seite und der $\lambda$/4-Platte 44 und dem Analysator 45, die ebenfalls beide rotierbar sind, angeordnet. In der Ausgangsstellung des Messvorgangs sind der Polarisator 43 und der Analysator 45 zunächst gekreuzt zueinander orientiert und die Hauptachse der $\lambda$/4 Platte ist parallel zur Durchlassrichtung des Polarisators 43 angeordnet. In einem ersten Schritt werden bei dem Messverfahren der Polarisator 43, die $\lambda$/4-Platte 44 und der Analysator 45 derart rotiert, dass die von dem Detektor 46 detektierte Lichtintensität maximal ist. Bei dieser Einstellung ist der mittels des Polarisators 43 erzeugte linear polarisierte Lichtstrahl 47 derart orientiert, dass seine Polarisationsrichtung parallel zur Winkelhalbierenden der Hauptspannungsrichtungen der Glasscheibe 7 ist. Die beiden Hauptspannungsrichtungen der Glasscheibe 7 stehen stets senkrecht zueinander, wobei die Orientierung der Hauptspannungsrichtungen aber über die Fläche der Glasscheibe variieren kann.

Da der parallel zur Winkelhalbierenden der Hauptspannungsrichtungen linear polarisierte Lichtstrahl 47 jeweils eine Komponente besitzt, die parallel zu einer der beiden Hauptspannungsrichtungen ist, besteht zwischen diesen Komponenten nach dem Durchlaufen der Glasscheibe 7 aufgrund der Doppelbrechung in der Glasscheibe, die zu unterschiedlichen Fortpflanzungsgeschwindigkeiten der beiden Komponenten im Glas sorgt, ein Gangunterschied. Aufgrund des Gangunterschieds ist der Polarisationszustand des Lichtstrahls 47 nach dem Durchlaufen der Glasscheibe 7 nicht mehr linear, sondern elliptisch. Mittels der $\lambda$/4-Platte 44 wird dieser elliptische polarisierte Lichtstrahl wieder in linear polarisiertes Licht umgewandelt. Die Schwingungsrichtung dieses linear polarisierten Lichtstrahls ist jedoch bezüglich der ursprünglichen Polarisationsrichtung, die durch den Polarisator 43 erzeugt wurde, um einen Winkel φ gedreht. Dieser Winkel φ kann durch Drehen des Analysators 45 bestimmt werden. Bei der Rotation des Analysators 45 wird ein Intensitätssignal gemessen, das in Abhängigkeit von dem Drehwinkel eine Sinuskurve darstellt. Bei dem Drehwinkel φ weist das von dem Detektor gemessene Signal ein Intensitätsminimum auf.

Zwischen dem auf diese Weise gemessenen Drehwinkel φ, der Wellenlänge $\lambda$ der Lichtquelle und dem optischen Gangunterschied Γ der beiden Teilstrahlen besteht folgender Zusammenhang:

$$\Gamma = \lambda * \varphi / 180°$$

Auf diese Weise können also Gangunterschiede gemessen werden, die maximal die Hälfte der Wellenlänge $\lambda$ der Lichtquelle 41 betragen. Die Verwendung einer Lichtquelle 41 mit größerer Wellenlänge $\lambda$ vergrößert den Messbereich, wodurch sich aber gleichzeitig die Auflösung verschlechtert.

Zwischen dem Gangunterschied Γ und der Hauptspannungsdifferenz σ1 - σ2 in der Glasscheibe 7 besteht gemäß der Hauptgleichung der Spannungsoptik folgender Zusammenhang:

$$\sigma1 - \sigma2 = \Gamma / (C * d)$$

Dabei ist d die Dicke der Glasscheibe und C die materialabhängige spannungsoptische Konstante, die beispielsweise für Floatglas etwa $2{,}54 * 10^{-12}$ Pa$^{-1}$ beträgt.

Die Lichtquelle 41, die λ/4-Platte 42 und der Polarisator 43 auf der einen Seite der Glasscheibe 7 und die λ/4-Platte 44, der Analysator 45 und der Detektor 46 auf der anderen Seite der Glasscheibe 7 bilden vorteilhaft zusammen einen Messkopf aus, der vorteilhaft zumindest in einer Richtung senkrecht zur Transportrichtung der Glasscheiben beweglich ist. Die Messung erfolgt in diesem Fall zunächst an einer Vielzahl von Messpunkten, die in einer Richtung senkrecht zur Transportrichtung in einer Reihe angeordnet sind. Nach der Messung einer Reihe von Messpunkten wird die Glasscheibe 7 um eine Einheit des Messrasters weitertransportiert und die nächste Reihe von Messpunkten gemessen. Alternativ kann der Messkopf auch zweidimensional beweglich sein, so dass eine Messung der gesamten Fläche der Glasscheibe auch ohne Bewegung der Scheibe möglich ist. Die Messpunkte können beispielsweise in einem Rasterabstand von etwa 1 cm angeordnet sein. Eine Messfläche von 50 cm x 50 cm umfasst somit beispielsweise 51 x 51 = 2601 Messpunkte. Die Dauer der Messung beträt pro Messpunkt vorteilhaft nur etwa 1 s oder weniger.

Die auf diese Weise von der Messvorrichtung 4 ermittelten Messdaten werden, wie in Figur 1 durch den Pfeil 84 angedeutet, zu der Steuereinheit 8 übertragen. Die Messdaten, die die Information über die Verteilung der optischen Anisotropie über die Fläche der Scheibe enthalten, werden von der Steuereinheit 8 verarbeitet, und zur Ansteuerung der Heizvorrichtung 2 und der Heizvorrichtung 3 verwendet, wie in Figur 1 durch die Pfeile 82 und 83 angedeutet wird. Insbesondere werden die Parameter der Mittel zur Strahlungserwärmung 22 und/oder der Mittel zur Konvektionserwärmung 21 in der Heizvorrichtung 2 und die Mittel zur Konvektionskühlung 31 in der Abkühlvorrichtung 3 von der Steuereinheit 8 anhand der ermittelten Messdaten derart geregelt, dass die optische Anisotropie über die Fläche der Scheibe minimiert wird.

Vorzugsweise kann auch die Transportvorrichtung 6, wie in Figur 1 durch den Pfeil 86 angedeutet, von der Steuereinheit 8 anhand der ermittelten Messdaten gesteuert werden. Auf diese Weise kann auch die Bewegung der Glasscheiben 7 in der Heizvorrichtung 2 und/ oder der Abkühlvorrichtung 3 derart optimiert werden, dass beim Aufheizen und/oder Abkühlen eine möglichst homogene Temperaturverteilung über die Fläche der Scheibe entsteht, so dass die optische Anisotropie vermindert wird.

Bei einer bevorzugten Ausführungsform enthält die Vorrichtung 1 zur Herstellung thermisch vorgespannter Glasscheiben zusätzlich eine Beschichtungsvorrichtung 5, durch die eine Beschichtung, die bevorzugt eine mehrere optisch wirksame Schichten enthält, auf die Glasscheiben 7 aufgebracht werden kann. Bei der Beschichtung kann es sich insbesondere um eine Wärmeschutz- oder Sonnenschutzbeschichtung handeln, die insbesondere bei Architekturglas eingesetzt wird.

Die der Beschichtungsvorrichtung 5 kann insbesondere eine Magnetron-Sputteranlage sein. Mittels der Beschichtungsvorrichtung 5 können vorzugsweise dünne Schichten verschiedener Materialien, insbesondere dünne Metall-, Oxid- oder Nitridschichten auf die Glasscheiben 7 aufgebracht werden. Beispielsweise kann die Beschichtungsvorrichtung 5 eine Sputteranlage sein, die mehrere Kathoden 52 zum Aufbringen verschiedener Schichtmaterialien enthält. Die Beschichtungsvorrichtung 5 weist eine Steuereinheit 51 auf, durch die die Vorrichtungen 52 zum Aufbringen der verschiedenen optisch wirksamen Schichten, beispielsweise Kathoden, einzeln ansteuerbar sind.

Bei einer bevorzugten Ausführungsform werden die von der Messvorrichtung 4 ermittelten Messdaten der Verteilung der optischen Anisotropie über die Fläche der Glasscheibe, wie in Figur 1 durch den Pfeil 85 angedeutet, an die Steuereinheit 51 der Beschichtungsvorrichtung 5 weitergeleitet, um auf diese Weise die Parameter des Beschichtungsvorgangs zu steuern. Vorzugsweise werden die Schichtparameter, insbesondere die Dicken der aufgebrachten optisch wirksamen Schichten, derart optimiert, dass die beschichtete Glasscheibe 7 eine möglichst geringe optische Anisotropie aufweist. Eine geeignete Optimierung der aufgebrachten Schichtsysteme, insbesondere der Dicken der Einzelschichten, kann durch Simulationen, insbesondere eine Berechnung der Transmission und/oder Reflektion der Glasscheiben in Abhängigkeit vom Einfallswinkel, der Wellenlänge und des Polarisationszustandes des einfallenden Lichts, erfolgen.

In Figur 3 ist ein Ausführungsbeispiel einer mit dem erfindungsgemäßen Verfahren hergestellten thermisch vorgespannten Glasscheibe 7 dargestellt. Bei der Glasscheibe 7 beträgt der optische Gangunterschied für Licht zweier Polarisationsrichtungen, die parallel zu den Hauptspannungsrichtungen der Glasscheibe 7 verlaufen, an keiner Stelle einer durch die gestrichelte Linie angedeuteten Messfläche MF, die mindestens 95 % der Gesamtfläche der Glasscheibe umfasst, nach dem Durchgang durch die Glasscheibe mehr als 80 nm. Die Messung des optischen Gangunterschieds erfolgt dabei vorzugsweise durch das zuvor anhand der Figur 2 erläuterte Messverfahren.

Bei der Glasscheibe 7 handelt es sich vorzugsweise um eine Flachglasscheibe für die Anwendung als Architekturglas. Die Glasscheibe kann bearbeitete Kanten, insbesondere eine umlaufende Fase aufweisen (nicht dargestellt).

Die Glasscheibe kann insbesondere eine Gesamtfläche von mindestens 0,25 m$^2$ aufweisen. Bevorzugt weist die Glasscheibe 7 eine Gesamtfläche von mindestens 1 m$^2$, besonders bevorzugt von mindestens 5 m$^2$ auf.

Bei der Glasscheibe kann es sich um so genanntes teilvorgespanntes Glas, das an seiner Oberfläche eine Druckspannung von mindestens 24 MPa aufweist, handeln. Bevorzugt ist die Glasscheibe 7 ein so genanntes EinscheibenSicherheitsglas (ESG), das an seiner Oberfläche eine Druckspannung von mindestens 69 MPa aufweist.

Die Dicke d der Glasscheibe beträgt vorteilhaft mindestens 8 mm, bevorzugt mindestens 12 mm und besonders bevorzugt mindestens 15 mm.

In Figur 4 ist ein Ausführungsbeispiel einer thermisch vorgespannten Glasscheibe 7 dargestellt, die mit einer Beschichtung 9 aus mehreren optisch wirksamen Schichten 91, 92, 93, 94, 95 versehen ist. Bei der Beschichtung 9 kann es sich insbesondere um eine Wärmeschutz- oder Sonnenschutzschicht handeln. Die Beschichtung 9 umfasst beispielsweise eine Metallschicht 93, die zwischen mehreren Oxid- und/oder Nitridschichten 91, 92, 94, 95 eingebettet ist. Derartige Schichtsysteme sind insbesondere aus der in der Beschreibungseinleitung zitierten Druckschrift EP 1529761 A1 bekannt und werden daher an dieser Stelle nicht näher erläutert.

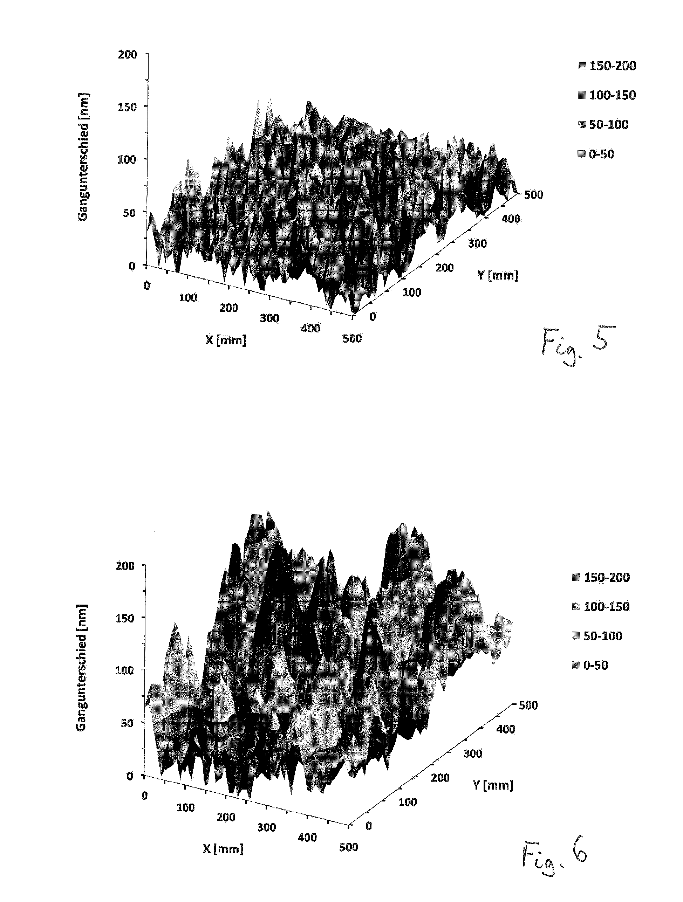

In Figur 5 sind die Messergebnisse des optischen Gangunterschieds für die beiden Polarisationsrichtungen, die parallel zu den Hauptspannungsrichtungen der Glasscheibe verlaufen, über den Koordinaten X und Y einer Messfläche von 50 cm x 50 cm dargestellt. Durch eine Optimierung der Parameter der Aufheizvorrichtung 2 und der Abkühlvorrichtung 3 anhand der in der Messvorrichtung 4 ermittelten Messdaten konnte erreicht werden, dass der optische Gangunterschied an keiner Stelle der Messfläche mehr als 80 nm beträgt. Bei derart geringen optischen Gangunterschieden sind für einen Betrachter auch unter verschiedenen Lichteinfallswinkeln keine störenden Farbabweichungen zwischen verschiedenen Bereichen der Scheibe mehr wahrnehmbar. Eine derart thermisch vorgespannte Glasscheibe eignet sich daher insbesondere für die Anwendung als Architekturglas, insbesondere auch für großflächige Scheiben mit einer Fläche von mindestens 1 m$^2$ oder sogar mehr als 5 m$^2$.

In Figur 6 ist im Vergleich dazu das Ergebnis einer Messung des optischen Gangunterschieds über eine Messfläche mit einer Größe von 50 cm x 50 cm bei einer thermisch vorgespannten Glasscheibe gemäß dem Stand der Technik dargestellt. Bei dieser Glasscheibe treten optische Gangunterschiede von mehr als 150 nm auf, die je nach Lichteinfall zu Farbabweichungen führen können, die für einen Betrachter der Scheibe sichtbar sind.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

**Patentansprüche**

1. Vorrichtung (1) zur Herstellung thermisch vorgespannter Glasscheiben (7), umfassend:

   - eine Heizvorrichtung (2),
   - eine Abkühlvorrichtung (3),
   - eine Messvorrichtung (4), die geeignet ist, die optische Anisotropie einer Glasscheibe (7) an einer Vielzahl von Messpunkten, die über die Fläche der Glasscheibe (7) verteilt sind, zu messen, und
   - einer Steuereinheit (8), die geeignet ist, die Heizvorrichtung (2) und/oder die Abkühlvorrichtung (3) anhand der von der Messvorrichtung (4) ermittelten Messdaten zu steuern.

2. Vorrichtung nach Anspruch 1, wobei die Messvorrichtung (4) zur Messung des Polarisationszustands von polarisiertem Licht (47) einer Lichtquelle (41) nach dem Durchgang des polarisierten Lichts (47) durch die Glasscheibe (7) geeignet ist.

3. Vorrichtung nach Anspruch 2, bei der die Messvorrichtung (4) eine Lichtquelle (41), einen Polarisator (43), eine $\lambda$/4-Platte (44), einen Analysator (45) und einen Detektor (46) enthält.

4. Vorrichtung nach Anspruch 3, wobei der Polarisator (43), die $\lambda$/4-Platte (44) und der Analysator (45) rotierbar sind.

5. Vorrichtung nach einem der vorhergehenden Ansprüche, bei der die Heizvorrichtung (2) Mittel zur Strahlungserwärmung (22) und/oder Mittel zur Konvektionserwärmung (21) der Glasscheiben (7) enthält, die mittels der Steuereinheit (8) in Abhängigkeit von den von der Messvorrichtung (4) ermittelten Messdaten steuerbar sind.

6. Vorrichtung nach einem der vorhergehenden Ansprüche, bei der die Abkühlvorrichtung (3) Mittel zur Konvektionskühlung (31) der Glasscheiben (7) mit einem Luft- oder Gasstrom enthält, die mittels der Steuereinheit (8) in Abhängigkeit von den von der Messvorrichtung (4) ermittelten Messdaten steuerbar sind.

7. Vorrichtung nach einem der vorhergehenden Ansprüche,
die eine Transportvorrichtung (6) zum Transport der Glasscheiben (7) aufweist, wobei die Transportvorrichtung (6) mittels der Steuereinheit (8) in Abhängigkeit von den von der Messvorrichtung (4) ermittelten Messdaten steuerbar ist.

8. Vorrichtung nach einem der vorhergehenden Ansprüche,
wobei die Vorrichtung (1) eine Beschichtungsvorrichtung (5) zum Aufbringen einer Beschichtung (9) aus einer oder mehreren Schichten (91, 92, 93, 94, 95) auf die Glasscheiben (7) umfasst.

9. Vorrichtung nach Anspruch 8,
wobei die Beschichtungsvorrichtung (5) eine Steuereinheit (51) aufweist, welche zur Einstellung von Schichtparametern der Schichten (91, 92, 93, 94, 95) in Abhängigkeit von den in der Messvorrichtung (4) ermittelten Messdaten geeignet ist.

10. Verfahren zur Herstellung von thermisch vorgespannten Glasscheiben (7), mit den Verfahrensschritten:

   - Erhitzen der Glasscheiben (7) in einer Heizvorrichtung (2),
   - Abkühlen der Glasscheiben (7) in einer Abkühlvorrichtung (3),
   - Messung der optischen Anistropie einer Glasscheibe (7) an einer Vielzahl von Messpunkten, die über die Fläche der Glasscheibe (7) verteilt sind, wobei die ermittelten Messwerte zur Steuerung der Heizvorrichtung (2) und/oder der Kühlvorrichtung (3) verwendet werden.

11. Verfahren nach Anspruch 10,
wobei die Messung der optischen Anisotropie der Glasscheibe (7) durch Beleuchtung der Glasscheibe (7) mit polarisiertem Licht (47) und Messung des Polarisationszustands nach dem Durchgang des Lichts durch die Glasscheibe (7) erfolgt.

12. Verfahren nach Anspruch 10 oder 11,
bei dem die Glasscheiben (7) mittels eines Transportsystems (6) in der Heizvorrichtung (2) und der Abkühlvorrichtung (3) bewegt werden, wobei die Bewegung des Transportsystems (6) in Abhängigkeit von den in der Messvorrichtung (4) ermittelten Messdaten gesteuert wird.

13. Verfahren nach einem der Ansprüche 10 bis 12,
bei dem nach dem Abkühlen der Glasscheiben (7) eine Beschichtung (9) aus einer oder mehreren Schichten (91, 92, 93, 94, 95) auf die Glasscheiben (7) aufgebracht wird, wobei Schichtparameter der einen oder mehreren Schichten (91, 92, 93, 94, 95) in Abhängigkeit von der Messung der optischen Anisotropie eingestellt werden.

14. Verfahren nach Anspruch 13,
wobei die Beschichtung (9) eine Sonnenschutz- oder Wärmeschutzbeschichtung ist.

15. Thermisch vorgespannte Glasscheibe (7),
**dadurch gekennzeichnet, dass**
der optische Gangunterschied für Licht zweier Polarisationsrichtungen, die parallel zu den Hauptspannungsrichtungen der Glasscheibe (7) verlaufen, an keiner Stelle einer Messfläche (MF), die mindestens 95% der Gesamtfläche der Glasscheibe (7) umfasst, nach dem Durchgang durch die Glasscheibe (7) mehr als 80 nm beträgt.

16. Thermisch vorgespannte Glasscheibe nach Anspruch 15,
wobei die Glasscheibe (7) eine Fläche von mindestens 0,25 m$^2$ aufweist.

17. Thermisch vorgespannte Glasscheibe nach Anspruch 15 oder 16,
wobei die Glasscheibe (7) an ihrer Oberfläche eine Druckspannung von mindestens 24 MPa aufweist.

18. Thermisch vorgespannte Glasscheibe nach Anspruch 17,
wobei die Glasscheibe (7) an ihrer Oberfläche eine Druckspannung von mindestens 69 MPa aufweist.

19. Thermisch vorgespannte Glasscheibe nach einem der Ansprüche 15 bis 18,
wobei die Dicke der Glasscheibe (7) mindestens 8 mm beträgt.

20. Thermisch vorgespannte Glasscheibe nach einem der Ansprüche 15 bis 19,
wobei die Glasscheibe (7) mit einer Beschichtung (9) versehen ist.

21. Thermisch vorgespannte Glasscheibe nach Anspruch 20,
wobei die Beschichtung (9) eine Sonnenschutz- oder Wärmeschutzbeschichtung ist.

Fig. 1

42  43  7  44  45  46

41

47

Fig. 2

MF

7

d

Fig. 3

95
94
93
92
91

g

7

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008045416
- DE 19720330 C1
- DE 19511707 A1
- EP 1529761 A1